# EUROPÄISCHE PATENTSCHRIFT

(11) **EP 3 505 378 B1**
(45) Veröffentlichungstag und Bekanntmachung des Hinweises auf die Patenterteilung: **18.11.2020**
(21) Anmeldenummer: 18214420.4
(22) Anmeldetag: 20.12.2018
(51) Int. Cl.: B60J 7/185

(54) **CABRIOLET-FAHRZEUG MIT EINEM VERDECK UND EINER SENSOREINRICHTUNG**
CONVERTIBLE VEHICLE WITH A COVER AND A SENSOR DEVICE
VÉHICULE CABRIOLET DOTÉ D'UN CAPOT ET D'UN DISPOSITIF CAPTEUR

(30) Priorität: 30.12.2017 DE 102017012139
(43) Veröffentlichungstag der Anmeldung: 03.07.2019
(73) Patentinhaber: Valmet Automotive Oy, 23500 Uusikaupunki (FI)
(72) Erfinder: Ahlert, Patrick, 49143 Bissendorf (DE)
(74) Vertreter: Kronthaler, Wolfgang N.K.

(56) Entgegenhaltungen:
- DE-A1- 10 258 078
- DE-A1- 10 325 257
- FR-A1- 2 873 145

## Beschreibung

Die Erfindung betrifft ein Cabriolet-Fahrzeug mit einem Verdeck, das zwischen einer einen Fahrgastraum abdeckenden geschlossenen Position und einer den Fahrgastraum zumindest bereichsweise freigebenden offenen Position verlagerbar ist, nach der im Oberbegriff des Patentanspruches 1 näher definierten Art.

Aus der DE 10 2015 216 923 A1 ist ein Fahrzeugverdeck mit einer Dachspitze bekannt, wobei die Dachspitze mittels einem mit einem Verschlusshaken ausgeführten Verschlusselement an einer an einem Windlaufrahmen angeordneten Verschlussaufnahme festlegbar ist. Der Dachspitze ist weiterhin ein Zentrierzapfen zugeordnet, mittels dem die Dachspitze an dem Windlaufrahmen zentriert wird. Es ist zudem ein als Hall-Sensor ausgeführter Positionssensor im Bereich der Dachspitze vorgesehen, der beabstandet zu dem Verschlusshaken und dem Zentrierzapfen angeordnet ist. Durch ein Zusammenwirken des Positionssensors mit einem dem Verschlusshaken zugeordneten Segmentmagneten und einem im Bereich der Verschlussaufnahme angeordneten Magneten ist eine Verriegelungsbereitschaftsstellung und eine Verriegelungsstellung des Verschlusshakens ermittelbar.

Die FR 2 873 145 A1 zeigt eine Verriegelungssystem für ein Schiebedach, welches auch bei einem Verdeck eines Cabriolet-Fahrzeugs Anwendung finden kann. Hierbei ist an der Vorderkante des Schiebedaches ein Schloss mit einem rotierbaren Verriegelungshaken und einem Zentrierbolzen angeordnet, welches in Schließstellung mit einem Gegenstück zusammenwirkt, welches einen Verriegelungsbolzen zum Umgreifen durch den Verriegelungshaken und eine Aufnahme für den Zentrierbolzen aufweist. Zur Erfassung der Verriegelungsposition sind Sensoren am Gehäuse des Schlosses, welches den Verriegelungshaken und den Zentrierbolzen trägt, angeordnet.

Eine Sensoranordnung zum Erfassen der Endstellung eines Verdecks an einem Windschutzscheibenrahmen ist auch aus der DE 103 25 257 A1 bekannt. Hier trägt ein bei der Verriegelung betätigtes Stellglied einen Sensor.

Weiterhin beschreibt die DE 102 58 078 A1 eine Verriegelungsvorrichtung für haubenartige Abdeckungen von Fahrzeugöffnungen mit einer Sensorik.

Es ist Aufgabe der vorliegenden Erfindung, ein Cabriolet-Fahrzeug zu schaffen, bei dem auf bauraumgünstige Weise eine genaue Detektion einer Position einer Dachspitze gegenüber einem Windschutzscheibenrahmen ermöglicht ist.

Diese Aufgabe wird mit einem Cabriolet-Fahrzeug gemäß den Merkmalen des Patentanspruches 1 gelöst.

Es ist somit ein Cabriolet-Fahrzeug mit einem Verdeck vorgesehen, das zwischen einer einen Fahrgastraum abdeckenden geschlossenen Position und einer den Fahrgastraum zumindest bereichsweise freigebenden offenen Position verlagerbar ist, wobei das Verdeck in der geschlossenen Position mit einer im Bereich einer Dachspitze angeordneten, eine Verschlusseinrichtung und eine Zentriereinrichtung aufweisenden Verriegelungseinrichtung an einem Windschutzscheibenrahmen festlegbar ist, und wobei der Dachspitze eine Sensoreinrichtung zugeordnet ist, mittels der eine Position der Dachspitze relativ zu dem Windschutzscheibenrahmen ermittelbar ist. Erfindungsgemäß wird vorgeschlagen, dass die Sensoreinrichtung in einen Zentrierzapfen der Zentriereinrichtung integriert ist.

Die Anordnung der Sensoreinrichtung im Bereich der Dachspitze hat den Vorteil, dass keine Kabel, Stecker, Sensoren und dergleichen im fahrzeugseitigen Windschutzscheibenrahmen vorzusehen sind, womit das Verdeck als Modul mit der Sensoreinrichtung vorgefertigt werden kann. Durch die erfindungsgemäße Funktionsintegration der Sensoreinrichtung in die Zentriereinrichtung ist die Zentriereinrichtung multifunktional ausgeführt und ermöglicht auf bauraumgünstige Weise eine besonders genaue und sichere Ermittlung einer Position der Dachspitze gegenüber dem Windschutzscheibenrahmen.

Zudem ist durch die Sensoreinrichtung auf besonders genaue Weise eine Verdeckposition ermittelbar, in der die Verschlusseinrichtung in Eingriff mit einem zugeordneten, an dem Windschutzscheibenrahmen angeordneten Verriegelungsgegenelement bringbar ist. Weiterhin können mit der Sensoreinrichtung auf einfache und kostengünstige Weise auch eine geschlossene Verdeckposition sowie eine Luftverriegelung, in der die Verschlusseinrichtung nicht in Eingriff mit dem Verriegelungsgegenelement gelangt ist, erkannt werden.

Der Zentrierzapfen ist vorzugsweise in einem Spritzgussverfahren hergestellt, wobei die Sensoreinrichtung in dem Spritzgussverfahren in den Zentrierzapfen integriert bzw. eingespritzt sein kann.

Bei einer vorteilhaften Ausführung des erfindungsgemäßen Cabriolet-Fahrzeugs ist die Sensoreinrichtung mit einem Hall-Sensor ausgeführt. Alternativ oder zusätzlich hierzu können aber auch nach einem anderen bekannten Funktionsprinzip arbeitende Sensoreinrichtungen vorgesehen sein.

Vorzugsweise ist dem Windschutzscheibenrahmen wenigstens eine mit der Sensoreinrichtung zusammenwirkende Magneteinrichtung zugeordnet, die insbesondere in einem mit der Zentriereinrichtung zusammenwirkenden Bereich des Windschutzscheibenrahmens angeordnet ist.

Wenn der Verschlusseinrichtung eine Magneteinrichtung zugeordnet ist, kann auf konstruktiv einfache und kostengünstige Weise mittels der Sensoreinrichtung ermittelt werden, ob die Verriegelungseinrichtung in Eingriff mit dem Verriegelungsgegenelement ist oder beispielsweise eine Luftverriegelung vorliegt.

In zweckmäßigen Ausführungen der Erfindung kann die Zentriereinrichtung als ein Zentrierzapfen, der sich von der Dachspitze senkrecht in Richtung des Windlaufs mit einer sich verjüngenden Form erstrecken kann, und/oder die Verschlusseinrichtung als Verschlusshaken ausgeführt sein, wobei der Verschlusshaken zum Zusammenwirken mit einem an dem Windschutzscheibenrahmen angeordneten Bolzen ausgeführt ist.

Weitere Vorteile und vorteilhafte Ausführungsformen des erfindungsgemäßen Verdecks mit der Sensoreinrichtung ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfachte dreidimensionale Darstellung eines Verdecks eines Cabriolet-Fahrzeugs gemäß Fig. 1 in einer einen Fahrgastraum überspannenden geschlossenen Position, wobei eine Dachspitze des Verdecks an einem Windschutzscheibenrahmen festgelegt ist;
- Fig. 2: eine vereinfachte dreidimensionale Ansicht eines Bereichs des Cabriolet-Fahrzeugs gemäß Fig. 1, in dem die Dachspitze an dem Windschutzscheibenrahmen festlegbar ist, wobei eine mit einer Sensoreinrichtung ausgeführte Zentriereinrichtung ersichtlich ist; und
- Fig. 3: eine vereinfachte Darstellung eines Ausschnitts der Zentriereinrichtung in Alleinstellung, wobei eine Position der Sensoreinrichtung näher ersichtlich ist.

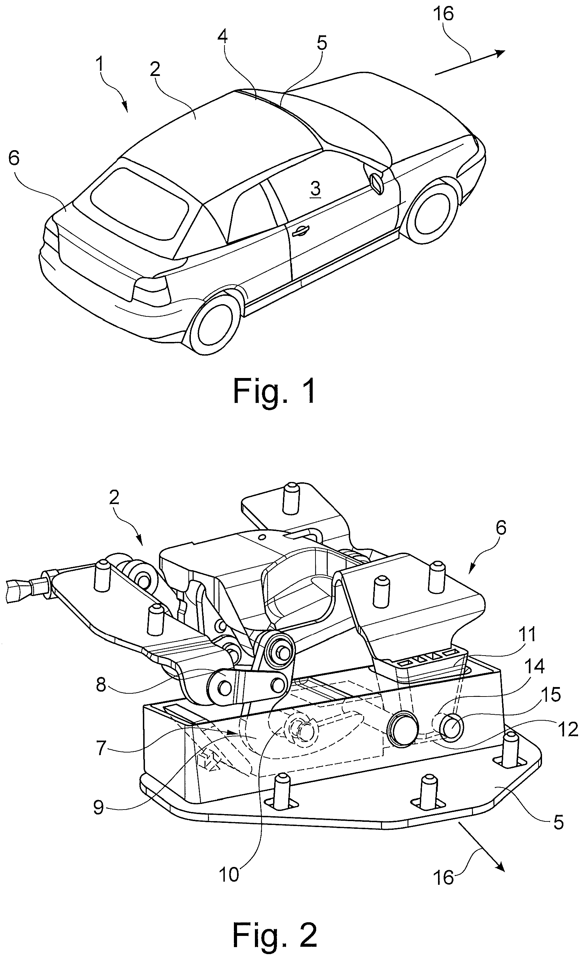

In Fig. 1 ist ein Cabriolet-Fahrzeug 1 mit einem in geschlossener Position dargestellten Verdeck 2 ersichtlich. Das Verdeck 2 ist mittels eines nicht näher ersichtlichen Verdeckgestänges aus einer einen Fahrgastraum 3 überspannenden geschlossenen Position, in der eine Dachspitze 4 des Verdecks 2 an einem Windschutzscheibenrahmen 5 festgelegt ist, in eine den Fahrgastraum 3 freigebende offene Position verlagerbar, in der das Verdeck 2 in einem von einem Verdeckkastendeckel 6 bzw. Heckdeckel abdeckbaren Verdeckablageraum angeordnet ist.

An der Dachspitze 4 ist eine in Fig. 2 näher ersichtliche Verriegelungseinrichtung 6 angeordnet, die eine Verschlusseinrichtung 8 und eine Zentriereinrichtung 11 aufweist. Die Verschlusseinrichtung 8 ist hier mit einem von einer nicht näher ersichtlichen Antriebseinrichtung mittels eines Betätigungsmechanismus verlagerbaren Verschlusshaken 9 ausgeführt. Der Verschlusshaken 9 ist zum Zusammenwirken mit einem an dem Windschutzscheibenrahmen 5 angeordneten Bolzen 10 ausgebildet, mit dem der Verschlusshaken 9 in Fig. 2 in Eingriff ist.

Die ebenfalls an der Dachspitze 4 angeordnete Zentriereinrichtung 11 ist hier als Zentrierzapfen 11 ausgeführt und zum Zusammenwirken mit einer an dem Windschutzscheibenrahmen 5 angeordneten, auf den Zentrierzapfen 11 abgestimmten Ausnehmung 12 ausgebildet.

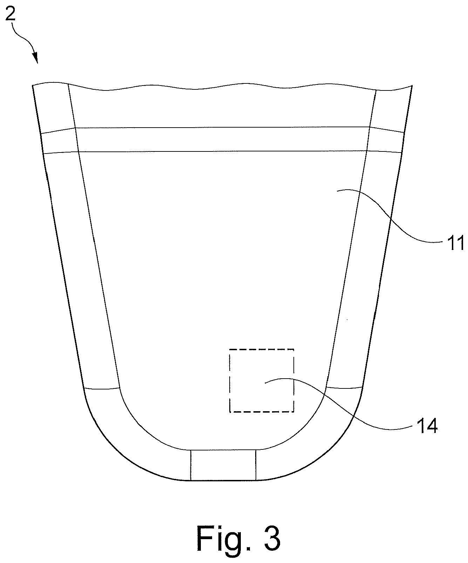

In den Zentrierzapfen 11, der vorliegend eine sich verjüngende Quaderform aufweist, ist eine hier als Hall-Sensor 14 ausgeführte Sensoreinrichtung integriert, die in einem in Fig. 3 näher ersichtlichen Bereich innerhalb äußerer Begrenzungen gen des Zentrierzapfens 11 angeordnet ist. Der Windschutzscheibenrahmen 5 weist im Bereich der Ausnehmung 12 eine Magneteinrichtung 15 auf, die zum Zusammenwirken mit dem Hall-Sensor 14 vorgesehen ist. Die Magneteinrichtung 15 ist dabei derart positioniert, dass der Hall-Sensor 14 vorliegend in Fahrzeugfrontrichtung 16 zumindest teilweise, insbesondere nahezu vollständig deckungsgleich zu der Magneteinrichtung 15 angeordnet ist.

Durch ein Zusammenwirken des Hall-Sensors 14 mit der Magneteinrichtung 15 kann mittels einer nicht näher ersichtlichen Steuereinrichtung auf konstruktiv einfache Weise, eine Position des Hall-Sensors 14 gegenüber der Magneteinrichtung 15 und hierdurch eine Position der Dachspitze 4 gegenüber dem Windschutzscheibenrahmen 5 sehr genau und sicher ermittelt werden. Hierdurch ist eine Position der Dachspitze 4 gegenüber dem Windschutzscheibenrahmen 5 besonders genau ermittelbar, in der der Verschlusshaken 9 in Eingriff mit dem Bolzen 10 bringbar ist.

Zusätzlich können durch den Hall-Sensor 14 im Zusammenspiel mit der Magneteinrichtung 15 auch eine geschlossene Verdeckposition und eine sogenannte Luftverriegelung, in der der Verschlusshaken 9 in unerwünschter Weise nicht mit dem Bolzen 10 in Eingriff gebracht wurde, ermittelt werden.

## Patentansprüche

1. Cabriolet-Fahrzeug (1) mit einem Verdeck (2), das zwischen einer einen Fahrgastraum (3) abdeckenden geschlossenen Position und einer den Fahrgastraum (3) zumindest bereichsweise freigebenden offenen Position verlagerbar ist, wobei das Verdeck (2) in der geschlossenen Position mit einer im Bereich einer Dachspitze (4) angeordneten, eine Verschlusseinrichtung (7) und eine Zentriereinrichtung (11) aufweisenden Verriegelungseinrichtung (6) an einem Windschutzscheibenrahmen (5) festlegbar ist, und wobei der Dachspitze (4) eine Sensoreinrichtung (14) zugeordnet ist, mittels der eine Position der Dachspitze (4) relativ zu dem Windschutzscheibenrahmen (5) ermittelbar ist,
**dadurch gekennzeichnet,**
**dass** die Sensoreinrichtung (14) in einen Zentrierzapfen der Zentriereinrichtung (11) integriert ist.

2. Cabriolet-Fahrzeug nach Anspruch 1, **dadurch gekennzeichnet, dass** die Sensoreinrichtung (14) mit einem Hall-Sensor ausgeführt ist.

3. Cabriolet-Fahrzeug nach einem der Ansprüche 1 oder 2, **dadurch gekennzeichnet, dass** dem Windschutzscheibenrahmen (5) wenigstens eine mit der Sensoreinrichtung (14) zusammenwirkende Magneteinrichtung (15) zugeordnet ist.

4. Cabriolet-Fahrzeug nach einem der Ansprüche 1 bis 3, **dadurch gekennzeichnet, dass** der Verschlusseinrichtung (7) eine Magneteinrichtung zugeordnet ist.

5. Cabriolet-Fahrzeug nach einem der Ansprüche 1 bis 4, **dadurch gekennzeichnet, dass** die Verschlusseinrichtung (7) mit einem Verschlusshaken (9) ausgeführt ist, der zum Zusammenwirken mit einem an dem Windschutzscheibenrahmen (5) angeordneten Bolzen (10) ausgeführt ist.

## Claims

1. A convertible vehicle (1) with a hood (2) which is displaceable between a closed position covering a passenger compartment (3) and an open position uncovering at least part of the passenger compartment (3), wherein the hood (2) can be fixed to a windscreen frame (5) in the closed position using a locking device (6) arranged in the region of a roof header (4) and comprising a closing device (7) and a centring device (11), and wherein a sensor device (14) is assigned to the roof header (4), by means of which sensor device (14) a position of the roof header (4) relative to the windscreen frame (5) can be determined,
**characterised in that**
the sensor device (14) is integrated in a centring pin of the centring device (11).

2. The convertible vehicle according to claim 1, **characterised in that** the sensor device (14) is designed with a Hall effect sensor.

3. The convertible vehicle according to any one of claims 1 or 2, **characterised in that** the windscreen frame (5) has at least one magnetic device (15) assigned to it which cooperates with the sensor device (14).

4. The convertible vehicle according to any one of claims 1 to 3, **characterised in that** a magnetic device is assigned to the closing device (7).

5. The convertible vehicle according to any one of claims 1 to 4, **characterised in that** the locking device (7) is designed with a locking hook (9) which is designed to cooperate with a bolt (10) arranged on the windscreen frame (5).

## Revendications

1. Véhicule cabriolet (1) comportant une capote (2) qui peut être déplacée entre une position fermée recouvrant un habitacle (3) et une position ouverte découvrant au moins partiellement l'habitacle (3), ladite capote (2) pouvant être fixé, en position fermée, sur un cadre de pare-brise (5) par un dispositif de verrouillage (6) disposé dans la zone d'une pointe de toit (4) et comprenant un dispositif de fermeture (7) et un dispositif de centrage (11), et un dispositif à capteur (14) étant associé à la pointe de toit (4), au moyen duquel une position de la pointe de toit (4) par rapport au cadre de pare-brise (5) peut être déterminée,
**caractérisée en ce que**
le dispositif à capteur (14) est intégré dans un ergot de centrage du dispositif de centrage (11).

2. Véhicule cabriolet selon la revendication 1, **caractérisé en ce que** le dispositif à capteur (14) est conçu avec un capteur à effet Hall.

3. Véhicule cabriolet selon l'une quelconque des revendications 1 ou 2, **caractérisé en ce qu'**au moins un dispositif magnétique (15) coopérant avec le dispositif à capteur (14) est associé au cadre de pare-brise (5).

4. Véhicule cabriolet selon l'une quelconque des revendications 1 à 3, **caractérisé en ce qu'**un dispositif magnétique est associé au dispositif de fermeture (7).

5. Véhicule cabriolet selon l'une quelconque des revendications 1 à 4, **caractérisé en ce que** le dispositif de fermeture (7) est conçu avec un crochet de fermeture (9) qui est conçu pour coopérer avec un boulon (10) disposé sur le cadre du pare-brise (5).
